(19) Europäisches Patentamt
European Patent Office
Office européen des brevets

(11) Veröffentlichungsnummer: **0 093 993**
**B1**

(12) **EUROPÄISCHE PATENTSCHRIFT**

(45) Veröffentlichungstag der Patentschrift: **03.07.85**

(51) Int. Cl.⁴: **C 09 K 21/04,** C 08 K 9/10, C 08 L 75/04, C 08 K 3/32

(21) Anmeldenummer: **83104304.7**

(22) Anmeldetag: **02.05.83**

(54) **Teilchenförmiges Mittel zur Verminderung der Entzündlichkeit von brennbaren Stoffen.**

(30) Priorität: **12.05.82 DE 3217816**

(43) Veröffentlichungstag der Anmeldung: **16.11.83 Patentblatt 83/46**

(45) Bekanntmachung des Hinweises auf die Patenterteilung: **03.07.85 Patentblatt 85/27**

(84) Benannte Vertragsstaaten: **AT BE CH DE FR GB IT LI NL SE**

(56) Entgegenhaltungen:
**EP - A - 0 033 361**
**EP - A - 0 035 094**
**FR - A - 2 314 216**
**US - H - 909 001**

(73) Patentinhaber: **HOECHST AKTIENGESELLSCHAFT, Postfach 80 03 20, D-6230 Frankfurt am Main 80 (DE)**

(72) Erfinder: **Staendeke, Horst, Dr., Alte Honrather Strasse 22, D-5204 Lohmar 21 (DE)**
Erfinder: **Dany, Franz-Josef, Dr., Heddinghovener Strasse 47, D-5042 Erftstadt (DE)**
Erfinder: **Kandler, Joachim, Dr., Amselweg 10, D-5042 Erftstadt (DE)**

EP 0 093 993 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gegenstand der Erfindung ist ein teilchenförmiges Mittel auf der Basis von freifliessenden, pulverförmigen Ammoniumpolyphosphaten zur Verminderung der Entzündlichkeit von brennbaren Stoffen.

Es ist generell bekannt, Ammoniumpolyphosphate als Flammschutzmittel für Kunststoffe zu verwenden. Beispielsweise beschreibt die Deutsche Auslegeschrift 1283532 ein Verfahren zur Herstellung von flammwidrigen Polyurethanen aus hochmolekularen Polyhydroxylverbindungen, Polyisocyanaten und Katalysatoren, wobei ein Ammoniumpolyphosphat der allgemeinen Formel

$$H_{(n-m)+2}(NH_4)_mP_nO_{3n+1}$$

in der n eine ganze Zahl mit einem über 10 liegenden Durchschnittswert ist, m eine ganze Zahl bis maximal n+2 bedeutet und m/n zwischen etwa 0,7 und 1,1 liegt, als Flammschutzmittelzusatz vorgeschlagen wird.

Obgleich Ammoniumpolyphosphate der vorgenannten allgemeinen Formel beim Einsatz in Polyurethanen letzteren einen guten Flammschutz verleihen, sind sie mit dem Nachteil behaftet, dass sie nicht ausreichend wasserunlöslich sind und deshalb im Laufe der Zeit durch Witterungseinflüsse aus dem Kunststoff ausgewaschen werden. Wie aus Spalte 3 der DE-AS 1283532 ersichtlich, besitzen die dort als praktisch wasserunlöslich bezeichneten Ammoniumpolyphosphate dennoch eine beachtliche Löslichkeit in Wasser, indem beim Aufschlämmen von 10 g des Ammoniumpolyphosphats in 100 m³ Wasser bei 25°C bis zu 5 g des Ammoniumpolyphosphates gelöst werden, d.h. dass die löslichen Anteile des Ammoniumpolyphosphates bis zu 50% der eingesetzten Menge betragen.

Bei der Herstellung selbstverlöschender, nachgiebiger Polyurethanschäume, beispielsweise nach dem Verfahren der DE-AS 2313819, durch Polykondensation eines Trimethylpropan eingebaut enthaltenden Polyester-Polyols mit einem organischen Polyisocyanat in Gegenwart von mindestens 10 Gewichtsteilen Ammoniumpolyphosphat, bezogen auf 100 Gewichtsteile des Polyols, bereitet die Homogenisierung des Ausgangsgemisches aufgrund dessen Viskosität besondere Schwierigkeiten. In Gegenwart von 30 Gew.-% Ammoniumpolyphosphat mit einem Kondensationsgrad n von etwa 700 beträgt nämlich die Viskosität des Ansatzes etwa 70 000 mPa.s, so dass das Rühren oder Kneten des Ansatzes problematisch ist, weil bereits die Viskosität eines in der Praxis eingesetzten Polyesterpolyols auf der Basis von Adipinsäure, Diethylenglykol und einem Triol bei 25°C über 20 000 mPa.s liegt. In diesem Falle war man bisher genötigt ein Ammoniumpolyphosphat mit niedrigem Kondensationsgrad von $n < 400$ zu verwenden, das jedoch eine höhere Wasserlöslichkeit besitzt als die hochkondensierten Phosphate und dadurch aus dem Schaumstoff bei Bewitterung teilweise ausgewaschen wird.

Es bestand somit die Aufgabe, Mittel und Wege zur Verminderung der Löslichkeit von Ammoniumpolyphosphaten in Wasser zu finden, so dass die Gefahr des Auswaschens des Ammoniumpolyphosphates beim Einsatz als Flammschutzmittel in Kunststoffen durch Witterungseinflüsse möglichst weitgehend vermieden wird. Weiterhin soll der Zusatz des Ammoniumpolyphosphates in bereits viskose Polyesterpolyole die Viskosität des Ansatzes so wenig wie möglich erhöhen.

Die vorstehende erläuterte Aufgabe wird auch in den Deutschen Offenlegungsschriften 2949537 und 3005252 zu lösen versucht, indem die Ammoniumpolyphosphat-Teilchen mit einem Melaminharz bzw. einem gehärteten Phenolharz behandelt und umhüllt werden.

Es hat sich nunmehr gezeigt und war nicht vorhersehbar, dass der erfindungsgemässe Ersatz von Melamin- bzw. Phenolharzen durch Epoxidharze mit gewissen Vorteilen verbunden ist.

Somit betrifft die Erfindung ein teilchenförmiges Mittel auf der Basis von freifliessenden, pulverförmigen Ammoniumpolyphosphaten der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, zur Verminderung der Entzündlichkeit von brennbaren Stoffen, welches dadurch gekennzeichnet ist, dass es aus

a) etwa 80 bis 99,5 Masse% Ammoniumpolyphosphat und

b) etwa 0,5 bis 20 Masse% eines gehärteten Epoxidharzes mit einem Epoxid-Äquivalentgewicht von etwa 170 bis etwa 220, wobei das Epoxidharz die einzelnen Ammoniumpolyphosphatteilchen umhüllt,

besteht.

Das Mittel der Erfindung besitzt im allgemeinen eine mittlere Teilchengrösse von etwa 0,01 bis 0,05 mm und der Kondensationsgrad n des Ammoniumpolyphosphates ist vorzugsweise eine ganze Zahl mit einem Durchschnittswert von 450 bis 800, bestimmt nach dem Endgruppen-Tritations-Verfahren (von Wazer), Griffiter und McCullough, Anal. Chem. 26, S. 1755 (1954).

Entsprechend einer weiteren bevorzugten Ausführungsform des erfindungsgemässen Mittels beträgt der Anteils des Epoxidharzes 1 bis 5 Masse%.

Das Epoxidharz ist vornehmlich ein alkohollösliches, härtbares Harz, welches durch Reaktion eines zweiwertigen oder mehrwertigen Alkohols mit Epichlorhydrin oder Glycerindichlorhydrin unter alkalischen Bedingungen oder gegebenenfalls in Gegenwart eines sauren Katalysators und anschliessender Alkali-Behandlung entsteht.

Schliesslich betrifft die Erfindung auch die Verwendung des vorbeschriebenen Mittels zum Flammfestmachen von Polyurethanen bzw. Polyurethanschäumen, wobei der Gehalt des Mittels im Polyurethanschaum etwa 5 bis 25 Masse%,

bezogen auf die Menge der Polyolkomponente des Polyurethans, beträgt.

Das Aufbringen der Epoxidharze auf die Ammoniumpolyphosphat-Teilchen kann entweder in einer alkoholischen Harzlösung durch Aushärten des Harzes mit Hilfe eines Härters unter Rühren der Ammoniumpolyphosphat/Harz-Suspension oder durch Verdampfen des Lösungsmittels der Suspension in einem beheizten Kneter unter gleichzeitiger Härtung des Harzes erfolgen.

Durch die Erfindungsgemässe Umhüllung der Ammoniumpolyphosphat-Teilchen mit einem gehärteten Epoxidharz wird die Löslichkeit des Ammoniumpolyphosphates in Wasser erheblich herabgesetzt, was sich günstig auswirkt, z.B. beim Einsatz eines derartig vorbehandelten Ammoniumpolyphosphates als Flammschutzmittel in Polyurethanschäumen.

Darüberhinaus beeinflusst der Zusatz des erfindungsgemässen Mittels zu dem Ausgangsgemisch für die Polyurethanschaumbildung zum Zwecke des Flammschutzes nicht dessen Viskosität im Sinne einer Viskositätserhöhung, so dass derartige Ausgangsgemische ohne Schwierigkeiten verarbeitet werden können.

Im Vergleich zu den bekannten Umhüllungsharzen, wie Phenol oder Melaminharzen, zeichnen sich Epoxidharze dadurch aus, dass sie die bekannten Harze in der erwünschten Verringerung der Löslichkeit in Wasser sowie der Reduzierung der Viskosität im wässerigem Milieu übertreffen.

Die erfindungsgemässen Mittel, deren Herstellung und Vorteile werden in den nachfolgenden Beispielen erläutert. Zur Durchführung der in den Beispielen dargelegten Versuche wurden im Handel erhältliche Ammoniumpolyphosphate sowie verschiedene, ebenfalls handelsübliche Epoxidharz-Systeme eingesetzt. Im einzelnen handelt es sich hierbei um folgende Produkte:

1. ®Exolit 263, Hoechst AG, Frankfurt/Main

Es handelt sich um ein feinkörniges, in Wasser schwer lösliches Ammoniumpolyphosphat der Formel $(NH_4PO_3)_n$, wobei n ~700 ist.

2. ®Exolit 422, Hoechst AG, Frankfurt/Main

Es handelt sich um ein feinkörniges, in Wasser schwer lösliches Ammoniumpolyphosphat, wobei der Kondensationsgrad n ~700 ist.

3. ®Beckopox EP 128, Hoechst AG, Frankfurt/Main

Flüssiges, sehr niedrig-viskoses Epoxidharz mit einem Epoxidäquivalentgewicht von ca. 200, einer Dichte bei 25°C von 1,12 g/ml und einer dynamischen Viskosität bei 25°C von 500-1000 mPa.s.

4. ®Beckopox VEH 2130, Hoechst AG, Frankfurt/Main

Modifizierter aliphatischer Polyaminhärter mit einem H-Äquivalentgewicht von ca. 200, einer Dichte bei 25°C von 1,10 g/ml und einer dynamischen Viskosität bei 25°C von ca. 12000 mPa.s.

5. ®Beckopox VEP 22, Hoechst AG, Frankfurt/Main

Flüssiges, sehr niedrig-viskoses Epoxidharz mit einem Epoxidäquivalentgewicht von ca. 195, einer Dichte bei 25°C von 1,11 g/ml und einer dynamischen Viskosität bei 25°C von 650-700 mPa.s.

6. ®Beckopox EP 140, Hoechst AG, Frankfurt/Main

Flüssiges, mittelviskoses Epoxidharz mit einem Epoxidäquivalentgewicht von ca. 190, einer Dichte bei 25°C von ca. 1,16 g/ml und einer dynamischen Viskosität bei 25°C von 9000-12000 mPa.s.

7. ®Beckopox EH 643, Hoechst AG, Frankfurt/Main

Lösemittelfreier Epoxidharzhärter auf Basis Polyamin mit einem H-Aktiv-Äquivalentgewicht von 55 und einer dynamischen Viskosität bei 25°C von 7000-10000 mPa.s.

8. ®Beckopox EH 641, Hoechst AG, Frankfurt/Main

Lösemittelfreier Epoxidharzhärter auf Basis Polyamin mit einem H-Aktiv-Äquivalentgewicht von 114 und einer dynamishen Viskosität bei 25°C von 200-300 mPa.s.

9. ®Desmophen 2200, Bayer AG, Leverkusen

Wenig verzweigter Polyester auf der Basis von Adipinsäure, Diethylenglykol und einem Triol; Hydroxyzahl 60 mg KOH/g; Viskosität bei 75°C 1000 mPa.s.; Dichte bei 20°C 1,18 g/ml; Wassergehalt < 0,1 Masse%.

®Desmophen 2200 dient zur Herstellung von Polyurethanschaumstoff auf Polyesterbasis.

*Beispiel 1:*

In einer Rührapparatur aus Glas wurden in 600 ml Methanol 150 g Ammoniumpolyphosphat (®Exolit 263) suspendiert und die Suspension zum schwachen Sieden erhitzt. Dann wurde im Verlauf von 15 Min. eine methanolische Epoxidharz/Epoxidhärter-Lösung eingetropft, die durch Auflösen von 3 g ®Beckopox EP 128 und 3 g ®Beckopox VEH 2130 in 100 ml Methanol hergestellt worden war. Zur Härtung des Epoxidharzes wurde die Suspension 2 Stunden unter schwachem Sieden des Methanols gerührt. Nach dem Abkühlen wurde filtriert und der erhaltene Filterkuchen bei 110°C im Stickstoffstrom getrocknet. Es wurden 154 g behandeltes Ammoniumpolyphosphat mit einem Epoxidharzgehalt von 3,5 Masse% erhalten.

Zur Bestimmung des Einflusses vorgenannten Produktes auf die Viskosität von ®Desmophen 2200 wurden 30 g des Produktes in 70 g ®Desmophen 2200 eingerührt und ca. 1 Std. bei 25°C temperiert. Anschliessend erfolgte die Viskositätsmessung des Gemisches mit dem Brookfield-Viskosimeter RVT, Spindel C bei 5 Umdrehungen pro Minute. Das Ergebnis ist in Tabelle 1 dargestellt.

Zur Bestimmung der wasserlöslichen Anteile wurden 10 g des hergestellten Produktes in 100 ml Wasser suspendiert und die Suspension 20 min bei 25°C gerührt. Anschliessend wurde der im Wasser ungelöste Anteil des Produktes innerhalb von 40 min durch Zentrifugieren sedimentiert. Von der überstehenden klaren Lösung wurden 5,0 ml in eine zuvor gewogene Aluminiumschale pipettiert und bei 120°C im Trockenschrank eingedampft. Aus der Menge des Verdampfungsrückstandes wurde der wasserlösliche Anteil berechnet. Das Ergebnis ist in Tabelle 1 dargestellt.

*Beispiel 2:*

Es wurde analog Beispiel 1 verfahren, wobei jedoch eine Lösung von 3 g ®Beckopox VEP 22 und 3 g ®Beckopox VEH 2130 in 100 ml Methanol eingesetzt wurde. Es wurden 152 g behandeltes Ammoniumpolyphosphat, im Folgenden APP genannt, mit einem Epoxidharzgehalt von 3,6 Masse% erhalten.

Die ermittelten Werte für die Viskosität und die wasserlöslichen Anteile analog Beispiel 1 sind in Tabelle 1 aufgeführt.

*Beispiel 3:*

In den 1 l-Kolben eines Labor-Rotationsverdampfers wurden 200 g APP (®Exolit 263) eingewogen und das APP mit einer Lösung aus 1,55 g ®Beckopox EP 140 und 0,45 g ®Beckopox EH 643 in 140 ml Methanol versetzt. Unter schwachem Unterdruck von ca. 0,95 bar wurde 1 Std. bei ca. 60°C gehärtet und anschliessend das Methanol unter vermindertem Druck bei ca. 0,85 bar abdestilliert. Die Trocknung des Produkts erfolgte bei 110°C/0,1 bar. Es wurden 200 g harzhaltiges APP mit einem Epoxidharzgehalt von 1,0 Masse% erhalten.

Die ermittelten Werte für die Viskosität und die wasserlöslichen Anteile analog Beispiel 1 sind in Tabelle 2 aufgeführt.

*Beispiel 4:*

Es wurde analog Beispiel 3 verfahren, wobei jedoch als Lösungsmittel für das Epoxidharz/Epoxidhärter-System 200 ml Butanol eingesetzt wurden. Es wurden 200 g harzhaltiges APP mit einem Epoxidharzgehalt von 1,0 Masse% erhalten.

Die ermittelten Werte für die Viskosität und die wasserlöslichen Anteile analog Beispiel 1 sind in Tabelle 2 aufgeführt.

*Beispiel 5:*

In einem beheizten Laborkneter wurden 200 g APP (®Exolit 263) auf 100°C erwärmt und in Verlauf von 15 min mit einer Lösung aus 7,74 g ®Beckopox EP 140 und 2,26 g ®Beckopox EH 643 in 100 ml Methanol versetzt. Anschliessend wurde das Gemisch 1 Std. bei 100-110°C unter Verdampfung des Lösungsmittels und Härtung des Epoxidharzes geknetet. Die Ausbeute betrug 204 g und der Epoxidharzanteil im APP 4,9 Masse%.

Die ermittelten Werte für die Viskosität und die wasserlöslichen Anteile analog Beispiel 1 sind in Tabelle 3 aufgeführt.

*Beispiel 6:*

Es wurde analog Beispiel 5 verfahren, wobei jedoch 3,87 g ®Beckopox EP 140 und 1,13 g ®Beckopox EH 643 eingesetzt wurden. Die Ausbeute betrug 200 g und der Epoxidharzanteil im APP 2,5 Masse%.

Die ermittelten Werte für die Viskosität und die wasserlöslichen Anteile analog Beispiel 1 sind in Tabelle 3 aufgeführt.

*Beispiel 7:*

Es wurde analog Beispiel 5 verfahren, wobei jedoch 1,94 g ®Beckopox EP 140 und 0,57 g ®Beckopox 643 gelöst in 50 ml Methanol eingesetzt wurden. Die Ausbeute betrug 195 g und der Epoxidharzanteil im APP 1,3 Masse%.

Die ermittelten Werte für die Viskosität und die wasserlöslichen Anteile analog Beispiel 1 sind in Tabelle 3 aufgeführt.

*Beispiel 8:*

Es wurde analog Beispiel 5 verfahren, wobei jedoch 0,97 g ®Beckopox EP 140 und 0,29 g ®Beckopox EH 643 gelöst in 50 ml Methanol eingesetzt wurden. Die Ausbeute betrug 195 g und der Epoxidharzanteil im APP 0,65 Masse%.

Die ermittelten Werte für die Viskosität und die wasserlöslichen Anteile analog Beispiel 1 sind in Tabelle 3 aufgeführt.

*Beispiel 9:*

Es wurde analog Beispiel 5 verfahren, wobei jedoch 1,55 g ®Beckopox EP 140 und 0,45 g ®Beckopox EH 643 gelöst in 50 ml n-Butanol eingesetzt wurden. Die Ausbeute betrug 199 g und der Epoxidharzanteil im APP betrug 1,0 Masse%.

Die ermittelten Werte für die Viskosität und die wasserlöslichen Anteile analog Beispiel 1 sind in Tabelle 3 aufgeführt.

*Beispiel 10:*

Es wurde analog Beispiel 5 verfahren, wobei jedoch als APP ®Exolit 422 zusammen mit 6,23 g ®Beckopox EP 140 und 3,77 g ®Beckopox EH 641, gelöst in 100 ml Methanol, eingesetzt wurde. Die Ausbeute betrug 206 g und der Epoxidharzanteil im APP 4,8 Masse%.

Die ermittelten Werte für die Viskosität und die wasserlöslichen Anteile analog Beispiel 1 sind in Tabelle 4 aufgeführt.

*Beispiel 11:*

Es wurde analog Beispiel 10 verfahren, wobei jedoch 3,12 g ®Beckopox EP 140 und 1,89 g ®Beckopox EH 641, gelöst in 50 ml Methanol, eingesetzt wurden. Die Ausbeute betrug 204 g und der Epoxidharzanteil im APP 2,4 Masse%.

Die ermittelten Werte für die Viskosität und die wasserlöslichen Anteile analog Beispiel 1 sind in Tabelle 4 aufgeführt.

*Beispiel 12:*

Es wurde analog Beispiel 10 verfahren, wobei jedoch 1,56 g ®Beckopox EP 140 und 0,95 g ®Beckopox EH 641, gelöst in 50 ml Methanol, eingesetzt wurden. Die Ausbeute betrug 203 g und der Epoxidharzanteil im APP 1,2 Masse%.

Die ermittelten Werte für die Viskosität und die wasserlöslichen Anteile analog Beispiel 1 sind in Tabelle 4 aufgeführt.

Die Tabellenwerte zeigen, dass mit Hilfe der erfindungsgemässen Modifizierungsmittel eine deutliche Reduzierung des Löslichkeitsverhaltens des APP erreicht werden kann. Gleiches gilt für das Viskositätsverhalten des APP in wässrigem Medium, während der gleichzeitigen Verbesserung des Polyol-Viskositätsverhaltens Grenzen gesetzt sind.

Besonders überraschend war jedoch, dass auch beim sehr gering wasserlöslichen ®Exolit 422 noch eine Verringerung der Wasserlöslichkeit von über 50% möglich war.

Was die Vorteile der Epoxidharze als Modifizierungsmittel für APP im Vergleich zu den bekannten Melamin- und Phenolharzen angeht, so werden diese aus den Tabellen 5 und 6 in Verbindung mit der Graphik ersichtlich. So wird die Löslichkeitsabnahme des APP bei Belegung mit dem Epoxidharz anstelle von Melaminharz um maximal 57% verbessert. Beim Vergleich von Epoxidharz mit Phenolharz ist die Verbesserungsrate noch drastischer. Eine vergleichende graphische Darstellung der erzielten Effekte ist der Zeichnung zu entnehmen, wobei A für Phenolharz, B für Melaminharz und C für Epoxidharz steht.

*Tabelle 1*

| Beispiel Nr. | Epoxidharz | | Viskosität (mPa·s) bei 25° C | | | | wasserlösl. Anteile | |
|---|---|---|---|---|---|---|---|---|
| | Typ | Konzentr. Masse% | $H_2O$ | Veränderung (%) | Polyol | Veränderung (%) | (Masse%) | Veränderung (%) |
| 1 | EP 128/VEH 2130 | 3,5 | 180 | −10 | 63 000 | −10 | 16 | −11 |
| 2 | VEP 22/VEH 2130 | 3,6 | 152 | −24 | 61 000 | −13 | 15 | −17 |
| Vergleichsprobe (®Exolit 263) | | — | 200 | — | 70 000 | — | 18 | — |

*Tabelle 2*

| Beispiel Nr. | Epoxidharz | | Viskosität (mPa·s) bei 25° C | | | | wasserlösl. Anteile | |
|---|---|---|---|---|---|---|---|---|
| | Typ | Konzentr. Masse% | $H_2O$ | Veränderung (%) | Polyol | Veränderung (%) | (Masse%) | Veränderung (%) |
| 3 | EP 140/EH 643 | 1,0 | 144 | −37 | 52 000 | −24 | 16 | −17 |
| 4 | EP 140/EH 643 | 1,0 | 140 | −39 | 50 000 | −26 | 11 | −39 |
| Vergleichsprobe (®Exolit 263) | | — | 228 | — | 68 000 | — | 18 | — |

*Tabelle 3*

| Beispiel Nr. | Epoxidharz | | Viskosität (mPa·s) bei 25° C | | | | wasserlösl. Anteile | |
|---|---|---|---|---|---|---|---|---|
| | Typ | Konzentr. Masse% | $H_2O$ | Veränderung (%) | Polyol | Veränderung (%) | (Masse%) | Veränderung (%) |
| 5 | EP 140/EH 643 | 4,9 | 17 | −93 | 68 000 | ± 0 | 4,4 | −74 |
| 6 | EP 140/EH 643 | 2,5 | 21 | −91 | 62 000 | − 9 | 5,2 | −71 |
| 7 | EP 140/EH 643 | 1,3 | 48 | −79 | 61 000 | −10 | 7,0 | −61 |
| 8 | EP 140/EH 643 | 0,65 | 110 | −52 | 57 000 | −16 | 12 | −33 |
| 9 | EP 140/EH 643 | 1,0 | 50 | −78 | 53 000 | −22 | 9,0 | −50 |
| Vergleichsprobe (®Exolit 263) | | — | 228 | — | 68 000 | — | 18 | — |

*Tabelle 4*

| Beispiel Nr. | Epoxidharz Typ | Epoxidharz Konzentr. Masse% | Viskosität (mPa·s) bei 25°C $H_2O$ | Veränderung (%) | Polyol | Veränderung (%) | wasserlösl. Anteile (Masse%) | Veränderung (%) |
|---|---|---|---|---|---|---|---|---|
| 10 | EP 140/EH 641 | 4,8 | 19 | −79 | 44000 | ± 0 | 2,7 | −67 |
| 11 | EP 140/EH 641 | 2,4 | 26 | −72 | 42000 | − 5 | 3,7 | −55 |
| 12 | EP 140/EH 641 | 1,2 | 34 | −63 | 38000 | −14 | 4,2 | −49 |
| Vergleichsprobe (®Exolit 422) | | — | 92 | — | 44000 | — | 8,2 | — |

*Tabelle 5*

| Harzmenge (in Masse%) | Verringerung der wasserlöslichen Anteile (Masse%) Melaminharz | Epoxidharz | Verbesserungsrate (in %) |
|---|---|---|---|
| 2,5 | 45 | 71 | 57 |
| 4,9 | 57 | 74 | 30 |

*Tabelle 6*

| Harzmenge (in Masse%) | Verringerung der wasserlöslichen Anteile (Masse%) Phenolharz | Epoxidharz | Verbesserungsrate (in %) |
|---|---|---|---|
| 1,3 | 18 | 61 | 239 |
| 2,5 | 18 | 71 | 294 |
| 4,8 | 27 | 74 | 174 |

## Patentansprüche

1. Teilchenförmiges Mittel auf der Basis von freifliessenden, pulverförmigen Ammoniumpolyphosphaten der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, zur Verminderung der Entzündlichkeit von brennbaren Stoffen, dadurch gekennzeichnet, dass es aus

a) etwa 80 bis 99,5 Masse% Ammoniumpolyphosphat und

b) etwa 0,5 bis 20 Masse% eines gehärteten Epoxidharzes mit einem Epoxid-Äquivalentgewicht von etwa 170 bis etwa 220, wobei das Epoxidharz die einzelnen Ammoniumpolyphosphatteilchen umhüllt,

besteht.

2. Mittel nach Anspruch 1, dadurch gekennzeichnet, dass es eine mittlere Teilchengrösse von etwa 0,01 bis 0,05 mm besitzt.

3. Mittel nach Anspruch 1 oder 2, dadurch gekennzeichnet, dass n eine ganze Zahl mit einem Durchschnittswert von 450 bis 800 ist.

4. Mittel nach Anspruch 1-3, dadurch gekennzeichnet, dass der Anteil des Epoxidharzes 1 bis 5 Masse% beträgt.

5. Mittel nach Anspruch 1-4, dadurch gekennzeichnet, dass das Epoxidharz ein alkohollösliches, härtbares Harz ist, welches durch Reaktion eines zweiwertigen oder mehrwertigen Alkohols mit Epichlorhydrin oder Glycerindichlorhydrin unter alkalischen Bedingungen oder gegebenenfalls in Gegenwart eines sauren Katalysators und anschliessender Alkali-Behandlung entsteht.

6. Verwendung des Mittels nach Anspruch 1-5 zum Flammfestmachen von Polyurethanen bzw. Polyurethanschäumen, wobei der Gehalt des Mittels im Polyurethanschaum etwa 5 bis 25 Masse%, bezogen auf die Menge der Polyolkomponente des Polyurethans, beträgt.

## Claims

1. Particulate agent based on free-flowing pulverulent ammonium polyphosphates of the general formula

$$H_{(n-m)+2}(NH_4)_mP_nO_{3n+1}$$

in which n stands for a whole number with an average value of about 20 to 800 and the ratio of m/n is about 1, for reducing the ignitability of combustible substances, the agent consisting of

a) about 80 to 99.5 mass% ammonium polyphosphate and

b) about 0.5 to 20 mass% of a hardened epoxide resin having an epoxide equivalent weight of about 170 to about 220, the epoxide resin envelopping the individual ammonium polyphosphate particles.

2. Agent as claimed in claim 1, wherein the particles have a mean size of about 0.01 to 0.05 mm.

3. Agent as claimed in claim 1 or 2, wherein n is a whole number with an average value of 450 to 800.

4. Agent as claimed in claims 1 to 3, wherein the epoxide resin proportion is 1 to 5 mass%.

5. Agent as claimed in claims 1 to 4, wherein the epoxide resin is an alcohol-soluble, hardenable resin which is obtained by reacting a dihydric or polyhydric alcohol with epichlorhydrin or glycerol dichlorohydrin under alkaline conditions or, if desired, in the presence of an acid catalyst, and then treating it with an alkali.

6. Use of the agent as claimed in claims 1-5 for flameproofing polyurethanes or polyurethane foam plastics, the agent being contained in the polyurethane foam plastics in a proportion of about 5 to 25 mass%, based on the quantity of polyol component in the polyurethane.

## Revendications

1. Agent en particules à base de polyphosphates d'ammonium pulvérulents fluides de formule générale

$$H_{(n-m)+2}(NH_4)_mP_nO_{3n+1}$$

dans laquelle n est un nombre entier d'une valeur moyenne d'environ 20-800 et le rapport m/n est d'environ 1, pour empêcher la combustibilité de matières combustibles, caractérisé en ce qu'il consiste en

a) environ 80-99,5% en poids de polyphosphate d'ammonium et

b) environ 0,5-20% en poids d'une résine époxyde durcie d'un poids équivalent d'époxyde d'environ 170-220, la résine époxyde enrobant les particules individuelles de polyphosphate d'ammonium.

2. Agent selon la revendication 1, caractérisé en ce qu'il présente une granulométrie moyenne d'environ 0,01-0,05 mm.

3. Agent selon la revendication 1 ou 2, caractérisé en ce que n est un nombre entier d'une valeur moyenne de 450-800.

4. Agent selon les revendications 1-3, caractérisé en ce que la proportion de la résine époxyde est de 1-5% en poids.

5. Agent selon les revendications 1-4, caractérisé en ce que la résine époxyde est une résine durcissable soluble dans l'alcool que l'on obtient par réaction d'un alcool bivalent ou polyvalent avec l'épichlorhydrine ou la dichlorhydrine du glycérol en conditions alcalines ou éventuellement en présence d'un catalyseur acide et ensuite traitement alcalin.

6. Utilisation de l'agent selon les revendications 1-5, pour l'ignifugeage de polyuréthannes ou de mousses de polyuréthannes, la teneur en agent dans la mousse de polyuréthannes étant égale à environ 5 à 25% en poids, par rapport à la quantité du composant alcoolique du polyuréthanne.

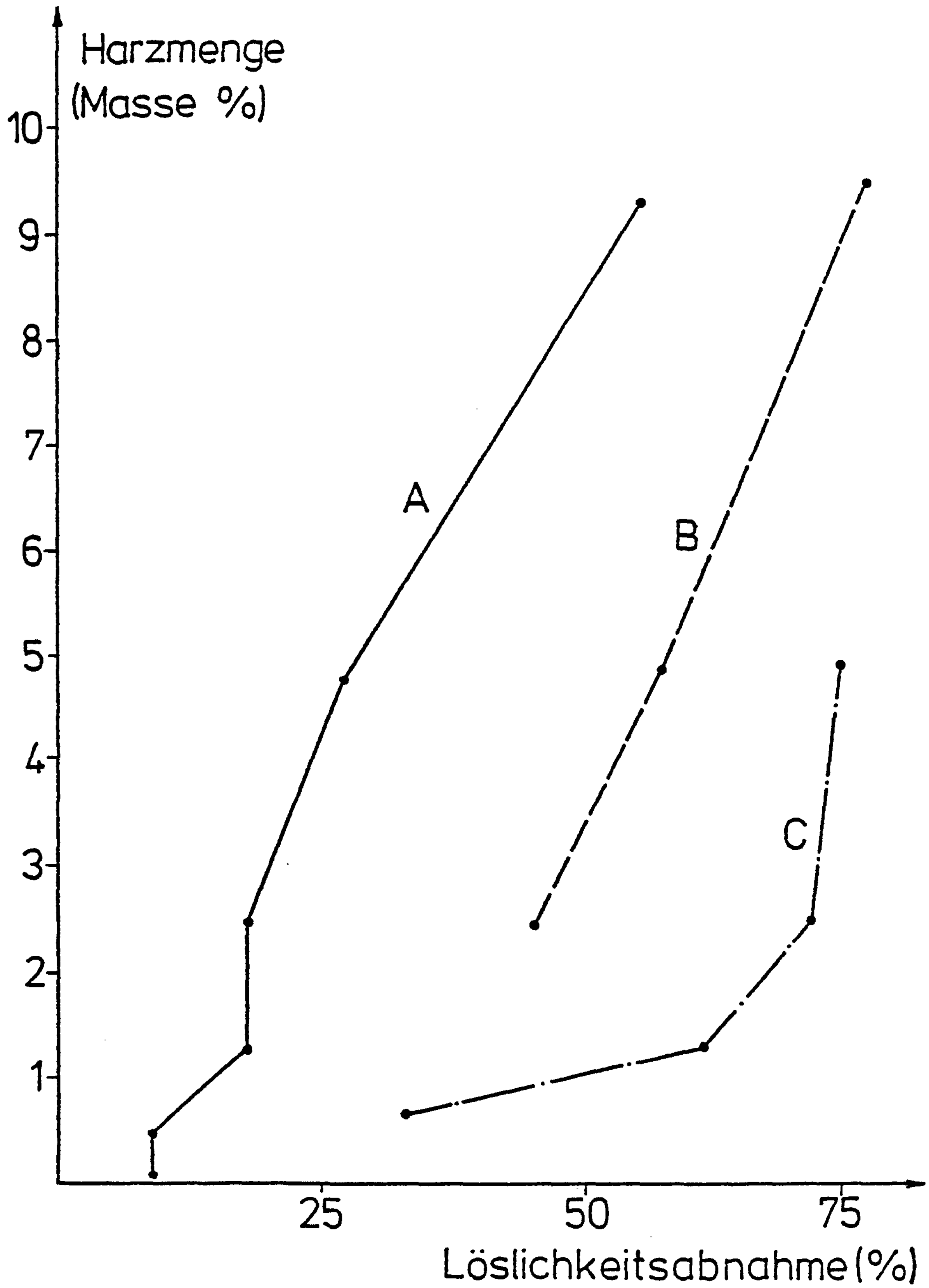
Harzmenge
(Masse %)
10
9
8
7
6
5
4
3
2
1
A
B
C
25
50
75
Löslichkeitsabnahme (%)